# EUROPEAN PATENT SPECIFICATION

(11) **EP 3 070 350 B1**
(45) Date of publication and mention of the grant of the patent: **22.11.2017**
(21) Application number: 16160867.4
(22) Date of filing: 17.03.2016
(51) Int. Cl.: F16C 11/06, F16C 23/02, F16C 23/04, F16C 25/02, F16C 35/02, F16C 23/06, F16C 25/06, F16C 35/067

(54) **BEARING ASSEMBLY HAVING AN ANTI-ROTATION DEVICE**
LAGERANORDNUNG MIT EINER DREHSICHERUNGSVORRICHTUNG
ENSEMBLE DE PALIER COMPORTANT UN DISPOSITIF ANTI-ROTATION

(30) Priority: 18.03.2015 US 201562134907 P
(43) Date of publication of application: 21.09.2016
(73) Proprietor: Roller Bearing Company of America, Inc., Oxford, CT 06478 (US)
(72) Inventor: POLANCO, Moises, 2800 Delémont (CH); CASSARD, David, 25230 Seloncourt (FR)
(74) Representative: Israelsson, Stefan

(56) References cited:
- WO-A1-2014/161561
- WO-A1-2014/161562
- JP-A- 2003 032 958
- US-A- 3 516 136

## Description

### Field of the Invention

The present invention relates generally to an anti-rotation device, and more specifically to an annular ring having a plurality of teeth that selectively engage teeth on a locking plate to prevent rotation of the ring relative to the locking plate. The present invention also relates to a bearing assembly that includes the anti-rotation device.

### Background of the Invention

Bearings can be used to reduce friction between moving parts of a mechanical assembly. Typically, bearings include an inner ring disposed at least partially in an outer ring. The outer ring typically includes a flanged end and a threaded end. The bearing can be secured in a bore of a housing portion of the mechanical assembly. For example, the outer ring can be positioned in the bore with the threaded end extending out of the bore. A washer can be disposed on the threaded end. A locking nut can be screwed onto the threaded end and tightened to compress the washer between the locking nut and the housing. Precise torquing of the locking nut onto the outer ring is desired to control operating torque of the bearing. Therefore, precise incremental angular adjustment of the locking nut is required.

However, it is common for locking nuts to inadvertently loosen during operation of the mechanical assembly. For example, vibration of movement of the mechanical assembly can cause the locking nut to loosen. Loosening of the nut is undesirable because the bearing can become dislodged from the housing. Various mechanisms have been employed to lock or secure the locking nut in position. However, such locking mechanisms require that the nut be rotated in large angular increments. For example, such locking nuts include large slots for receiving a spanner wrench to tighten the locking nut. The large slots are also typically configured to receive large teeth from a corresponding locking plate. Typically, there are only 3 or 4 large slots space symmetrically and circumferentially around the locking nut. As a result, typical locking mechanisms preclude precise incremental angular rotation of the locking nut and prevent the precise torquing of the locking nut on the outer ring. WO 2014/161562 A1 discloses a bearing assembly comprising: a bearing outer ring defining a cylindrical outer surface and a flange extending radially outward proximate a first end of the outer surface, a first threaded area formed in the outer surface proximate a second end of the outer surface; an annular ring having a radially inward facing threaded area threadingly engaged with the first threaded area of the outer surface; an anti-rotation device comprising: a plurality of first teeth extending radially outward, adjacent pairs of the plurality of first teeth having a first gap there between, and a locking plate having a base portion and a locking area extending from the base portion, the locking area having a plurality of second teeth extending outwardly therefrom, adjacent pairs of the plurality of second teeth having a second gap therebetween; in an unlocked configuration the locking plate is disengaged from the outer ring; and in a locked configuration the base portion is secured and a pair of the plurality of first teeth engages an opposing pair of the second gaps to prevent rotation relative to the locking plate.

### Summary

In one aspect, the present invention relates to a bearing assembly that includes a bearing outer ring that defines a cylindrical outer surface and a flange extending radially outward proximate a first end of the outer surface. A first threaded area is formed in the outer surface proximate a second end of the outer surface. The bearing assembly includes an annular ring having a radially inward facing threaded area that is threadingly engaged with the first threaded area of the outer surface. The bearing assembly includes an anti-rotation device which includes a plurality of first teeth extending radially outward and the annular ring. Adjacent pairs of the plurality of first teeth having a first gap therebetween. The plurality of first teeth are of a predetermined number sufficient to adjust torque preloading of bearing outer ring in predetermined increments. The anti-rotation device further includes a locking plate that has a base portion and a locking area extending from the base portion. The locking area has a plurality of second teeth extending outwardly therefrom. Adjacent pairs of the plurality of second teeth have a second gap therebetween. In an unlocked configuration, the locking plate is disengaged from the annular ring. In a locked configuration, the base portion is secured and a pair of the plurality of first teeth engages an opposing pair of the second gaps to prevent rotation of the annular ring relative to the locking plate and to maintain the torque preloading.

In one embodiment, the bearing assembly further includes a housing having a first bore that is defined by a first interior surface extending between a first axial housing face and a second axial housing face. The bearing outer ring is disposed partially in the first bore with the flange abutting the first axial housing face and the first threaded area extending outwardly from the second axial housing face. The torque preloading of the bearing outer ring secures the bearing outer ring into the housing.

In another aspect, the present invention relates to a bearing assembly that includes a housing having a first bore defined by a first interior surface extending between a first axial housing face and a second axial housing face. The bearing assembly includes a bearing outer ring that has a cylindrical outer surface and a flange that extends radially outward proximate a first end of the outer surface. A first threaded area is formed in the outer surface, proximate a second end of the outer surface. The bearing outer ring is disposed partially in the first bore with the flange abutting the first axial housing face and the first threaded area extending outwardly from the second axial housing face. The bearing assembly includes an annular ring (e.g., a locking nut) that has a radially inward facing threaded area that is threadingly engaged with the first threaded area of the outer surface. The annular ring has a plurality of first teeth extending radially outward therefrom. Adjacent pairs of the plurality of first teeth have a first gap therebetween. The plurality of first teeth are of a predetermined number sufficient to adjust torque preloading of bearing outer ring into the housing, in predetermined increments. The bearing assembly includes a locking plate that has a base portion and a locking area extending from the base portion. The locking area has a plurality of second teeth extending outwardly therefrom. Adjacent pairs of the plurality of second teeth have a second gap therebetween. In an unlocked configuration, the locking plate is disengaged from the annular ring. In a locked configuration, the base portion is secured to a portion of the second axial housing face such that a pair of the plurality of first teeth engages an opposing pair of the second gaps to prevent rotation of the annular ring relative to the locking plate and the housing and to maintain the torque preloading.

In one embodiment, axial end surfaces of the annular ring and axial end surfaces of the locking plate are in parallel planes.

In another aspect, the present invention resides in an anti-rotation device that includes an annular ring that has a radially inward facing threaded area and a plurality of first teeth extending radially outward therefrom. Adjacent pairs of the plurality of first teeth have a first gap therebetween. The anti-rotation device includes a locking plate having a base portion and a locking area extending from the base portion. The locking area has a plurality of second teeth that extend outwardly therefrom. Adjacent pairs of the plurality of second teeth have a second gap therebetween. The anti-rotation device defines an unlocked configuration wherein the locking plate is disengaged from the annular ring. The second gaps are configured to receive teeth from a corresponding locking plate. The anti-rotation device defines a locked position wherein the at least one of the plurality of first teeth engages one of the second gaps to prevent rotation of the annular ring relative to the locking plate.

### Description of the Drawings

FIG. 1 is a front view of an anti-rotation device of the present invention, shown installed on a bearing and housing in which the bearing is installed;
FIG. 2A is a front view of the anti-rotation device of FIG. 1 wherein a locking plate is disengaged from an annular ring;
FIG. 2B is a front view of the anti-rotation device of FIG. 1 wherein a locking plate is disengaged from an annular ring and a tool is being used to adjust the anti-rotation device;
FIG. 3 is a front view of an alternative embodiment of the anti-rotation device of the present invention;
FIG. 4A is a front view of another alternative embodiment of the anti-rotation device of the present invention;
FIG. 4B is a perspective view of two of the anti-rotation devices of the present invention;
FIG. 4C is a perspective view of an embodiment of the anti-rotation device of the present invention for use on a bearing in rod end of FIG. 4E;
FIG. 4D is a cross sectional view of the anti-rotation device of FIG. 4C taken across line 4D-4D;
FIG. 4E is a perspective view of a rod end;
FIG. 4F is a front view of one embodiment of the present invention, wherein the anti-rotation device is recessed in a housing
FIG. 5 is a side cross sectional view of a bearing assembly of the present invention taken across line 5-5 of FIG. 1; and
FIG. 6 is an enlarged cross sectional view of a portion of the bearing assembly of FIG. 5.

### Detailed Description of the Invention

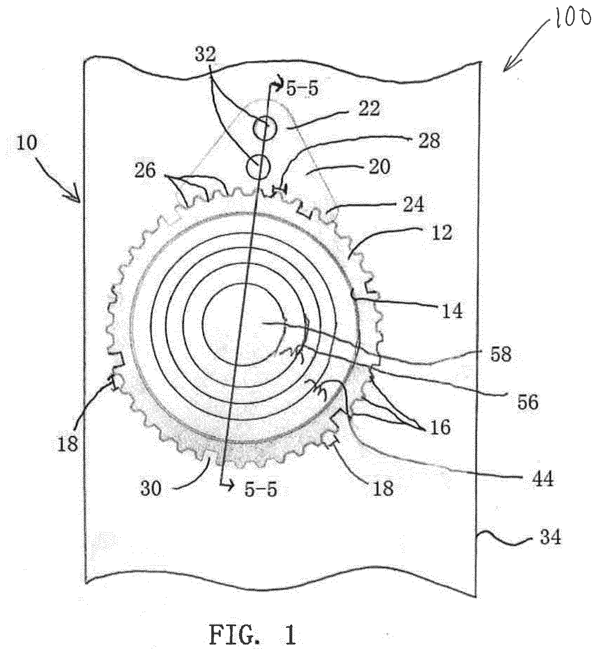

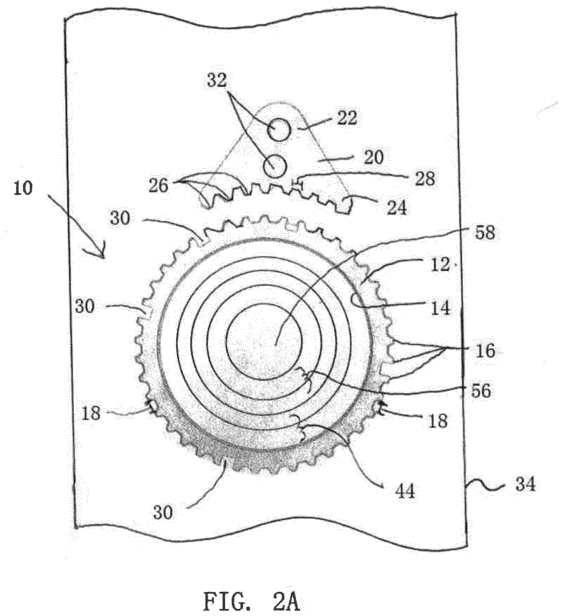

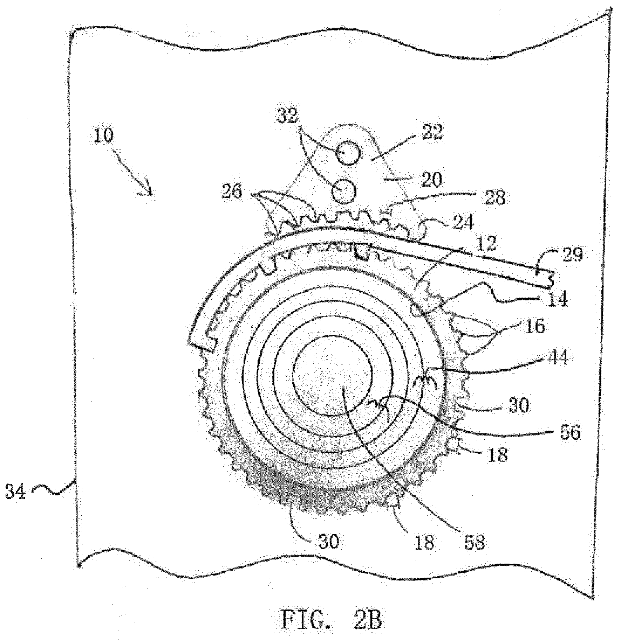

Referring to FIGS. 1 and 2, a bearing assembly 100 is shown with an anti-rotation device is generally designated by the numeral 10 installed there in. The anti-rotation device 10 includes an annular ring 12 (e.g., a torque adjusting and locking ring) that has a radially inward facing threaded area 14 and a plurality of first teeth 16 that extend radially outward therefrom. Adjacent pairs of the plurality of first teeth 16 have a first gap 18 therebetween.

As illustrated in FIGS. 1 and 2, the anti-rotation device 10 includes a locking plate 20 that has a base portion 22 and a locking area 24, which extends from the base portion 22. The locking area 24 has a plurality of second teeth 26 that extend outwardly therefrom. Adjacent pairs of the plurality of second teeth 26 have a second gap 28 therebetween. Each of the second gaps 28 are configured to receive a respective one the first teeth 16 from the locking plate 20. Respective ones of the first gaps 18 are configured to engage respective ones of the second teeth 26.

As shown in FIG. 2A, the anti-rotation device 10 defines an unlocked configuration in which the locking plate 20 is disengaged from the annular ring 12. As best shown in FIG. 1, the anti-rotation device 10 defines a locked position wherein a number (e.g., seven shown) of the plurality of first teeth 16 each engage a respective one of the second gaps 28 to prevent rotation of the annular ring 12 relative to the locking plate 20. In one embodiment, each of three of the plurality of first teeth 16 engage a respective one of the second gaps 28. However, the present invention is not limited in this regard, as any suitable number of first teeth 16 may engage a respective one of the second gaps 28, for example, but not limited to, four, five, six or more first teeth 16 may engage a respective one of the second gaps 28.

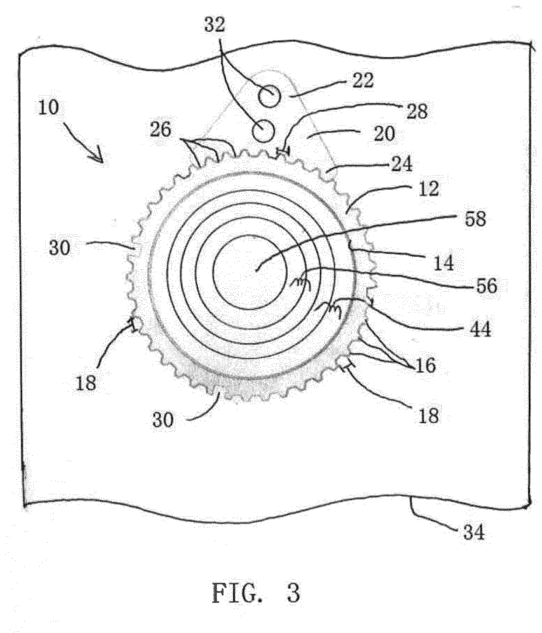

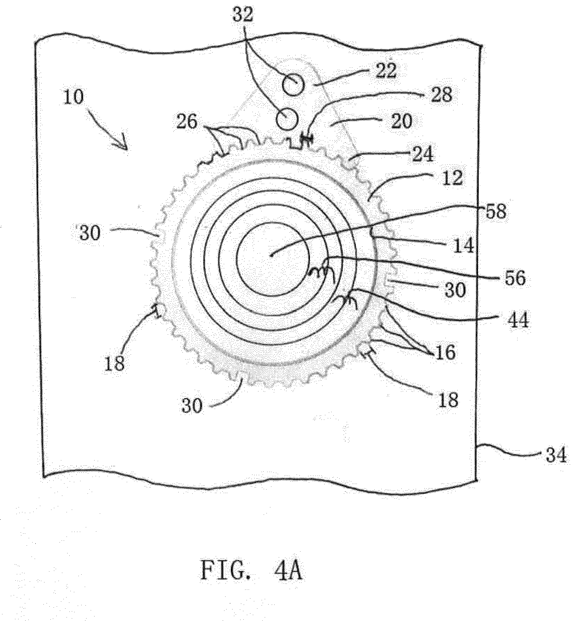

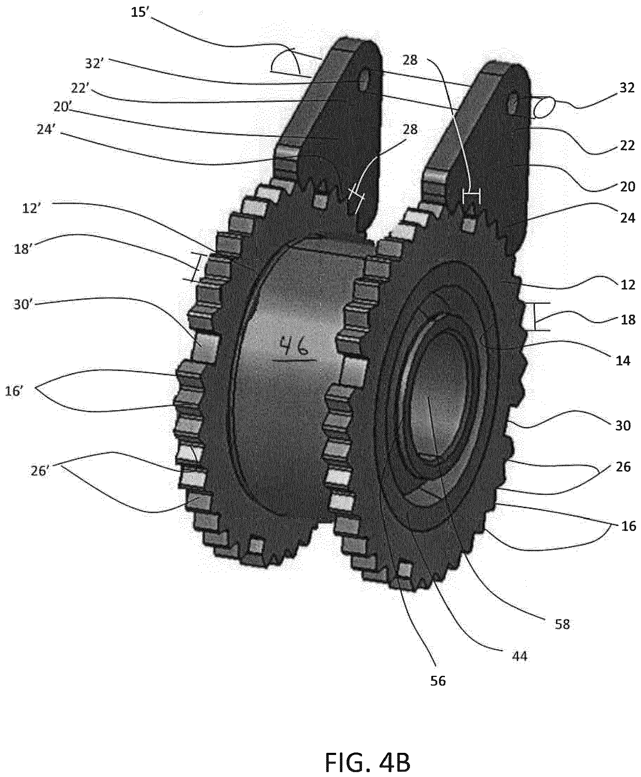

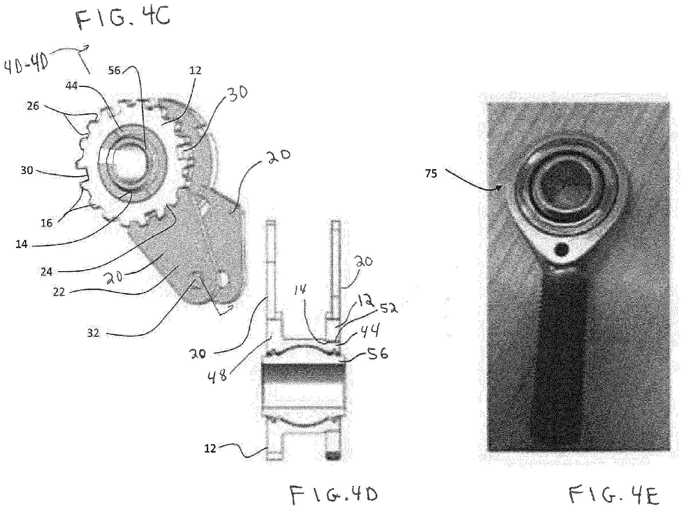

In one embodiment, as shown in FIG. 2B, a tool 29 (e.g., a spanner wrench) is used to adjust the radial position of the annular ring 12 relative to the locking plate 20. The tool 29 defines an arc shape that is complementary to the circumference of the annular ring 12. The tool 29 includes a number of prongs 29P (e.g., three prongs shown) extending radially inward from the tool 29. Each of the prongs 29P have a shape and spacing between one another that is complementary to the spacing of tool receiving slots 30 formed on the annular ring 12. In the embodiment shown in FIGS. 1, 2A and 2B there are five tool receiving slots 30. However, the present invention is not limited in this regard as any number of tool receiving slots 30 at any spacing may be employed, as shown for example in FIG. 3 (two tool receiving slots 30), FIG. 4A (four tool receiving slots 30) and FIG. 4B (four tool receiving slots 30).

As shown in FIGS. 1, 4A and 4B, each of the second teeth 26 are configured to be received in either a respective one of first slot 18 or a respective one of a tool receiving slot 30. Thus, the annular ring 12 can be positioned and torqued without being limited by the position of the tool receiving slots 30.

As best shown in FIG. 4B, axial end surfaces of the annular ring 12 and axial end surfaces of the locking plate 20 are in parallel planes.

In one embodiments shown in FIG. 3, two of the first gaps 18 are tool receiving slots 30 that have a greater radially inward depth than other ones of the first gaps 18. In one embodiment, as shown in FIG. 4A, four of the first gaps 18 are tool receiving slots 30. In this embodiment, the tool receiving slots 30 are spaced equally apart from one another and have a greater radially inward depth than other ones of the first gaps 18. In one embodiment, as shown in FIG. 1, there five are tool receiving slots 30. In this embodiment, the tool receiving slots 30 have a greater radially inward depth than the first gaps 18. In one embodiment, eight of the first gaps 18 are tool receiving slots 30. In this embodiment, the tool receiving slots 30 are spaced equally apart from one another and have a greater radially inward depth than other ones of the first gaps 18.

In one embodiment, as shown in FIG. 1, the base portion 22 includes fastening area 32 (e.g., a pair of bores) for securing the locking plate 20 to a fixture. Although a pair of bores are shown and described, the present invention is not limited in this regard, as any suitable fastening mechanism may be employed without departure from the broader aspects of the present invention, such as use of pins or threaded studs.

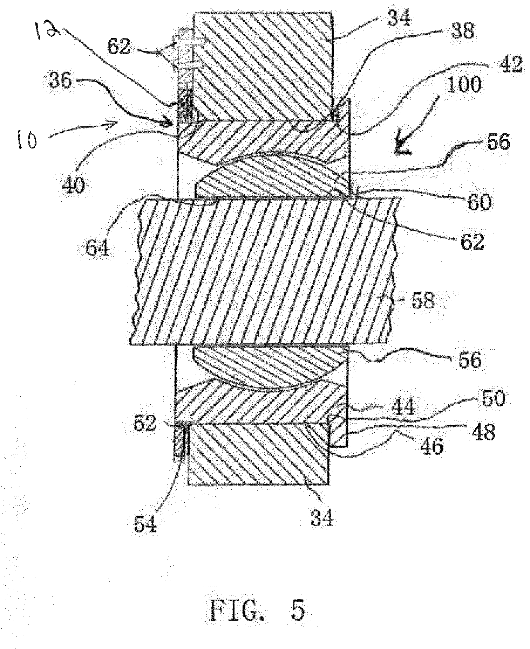

In one embodiment, as shown in FIGS. 1 and 5, the anti-rotation device 10 is positioned on a bearing assembly 100. The bearing assembly 100 includes a housing 34 having a first bore 36 extending therethrough. The first bore 36 is defined by a first interior surface 38 extending between a first axial housing face 42 and a second axial housing face 40.

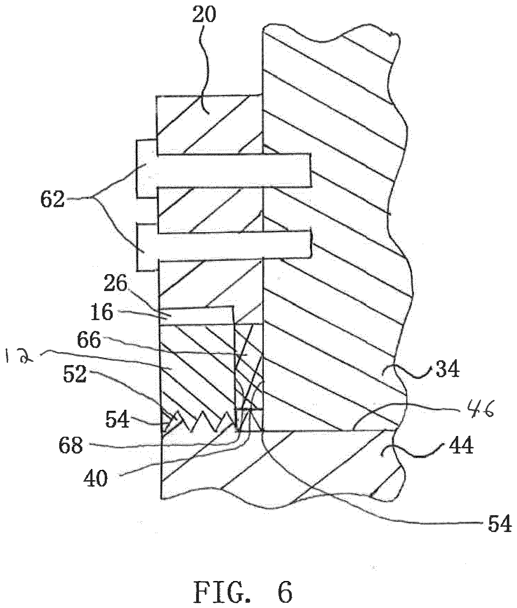

As shown in FIG. 5, the bearing assembly 100 includes an outer ring 44 that defines a cylindrical outer surface 46 and a flange 48. The flange 48 extends radially outward proximate a first end 50 of the outer surface 46. As best shown in FIG. 6, a first threaded area 52 is formed in the outer surface 46 proximate a second end 54 of the outer surface 46. As best shown in FIG. 5, the outer ring 44 is partially disposed in the first bore 36 with the flange 48 abutting the first axial housing face 42 and the first threaded area 52 extending outwardly from the second axial housing face 40.

As shown in FIG. 6, the bearing assembly 100 has one of the annular rings 12 and locking plates 20 positioned thereon. The annular ring 12 has a second threaded area 54 that threadedly engages the first threaded area 52.

As shown in FIG. 5, the locking area 24 is secured to the second axial housing face 40 via a suitable locking mechanism 62 (e.g., pinning or staking) to prevent rotation of the annular ring 12 relative to the locking plate 20 and the housing 34.

As shown in FIG. 5, the bearing assembly includes 100 includes an inner member 56. The inner member 114 is disposed partially in the outer race 44. The inner member 56 defines a bore 60. In one embodiment, as shown in FIG. 5, an elongate body 58, an outer surface 62 of which is complementary to an inner surface 64 of the inner member 56, is positioned in the bore 60.

In one embodiment, as shown in FIG. 6, a washer 66 (e.g., a jam nut) is positioned between the second axial housing face 40 and a axially inward facing surface 68 of the annular ring 12.

In one embodiment, as shown in FIG. 4B, the anti-rotation device 10 includes an annular ring 12 and a flange 12'. The flange 12' has no threaded area but is integral with the outer ring 44 and has four tool receiving slots 30' (three shown and one hidden). The combination of the flange 12' and the annular ring 12, one bolt 15, two locking plates 20 and 20', and a housing can be used as a retention method for a swaged bearing. This allows for the use the cost effective method of swaging; the machined design in the housing allows to lock in the annular rings 12 and the flange 12', and the bolt works to prevent the system from becoming loose.

The annular ring 12 has a radially inward facing threaded area 14 and a plurality of first teeth 16 that extend radially outward therefrom. Adjacent pairs of the plurality of first teeth 16 have a first gap 18 between them on each of the symmetrical annular rings 12. Each of the symmetrical annular rings 12 is configured to receive a plurality of second teeth 26 from a locking plate 20, pairs of the plurality of second teeth 26 having a second gap 28 therebetween. The second gaps 28 are configured to receive the first teeth from the locking plate 20. Respective ones of the first gaps 18 are configured to engage respective ones of the second teeth 26. The flange 12' has a similar configuration with element numbers marked with a prime (').

In one embodiment, as shown in FIGS. 4C-4E, the anti-rotation device 10 is positionable on a rod end 75 for retaining a bearing therein. In this embodiment, the anti-rotation device 10 is affixed to the rod end.

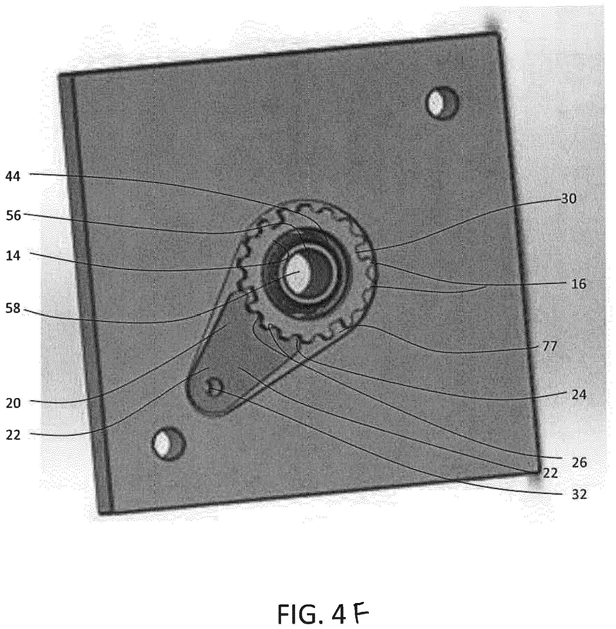

In one embodiment, as shown in FIG. 4F, the anti-rotation device 10 is recessed in a recess 77 in the housing.

While the present disclosure has been described with reference to various exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims. The invention is defined by appended claims only.

## Claims

1. A bearing assembly (100) comprising:
a bearing outer ring (44) defining a cylindrical outer surface (46) and a flange (48) extending radially outward proximate a first end (50) of the outer surface (46), a first threaded area (52) formed in the outer surface (46) proximate a second end (54) of the outer surface (46);
an annular ring (12) having a radially inward facing threaded area (14) threadingly engaged with the first threaded area (52) of the outer surface (46);
an anti-rotation device (10) comprising:
a plurality of first teeth (16) extending radially outward from the annular ring (12), adjacent pairs of the plurality of first teeth (16) having a first gap (18) therebetween, the plurality of first teeth (16) being of a predetermined number sufficient to adjust torque preloading of bearing outer ring (44) in predetermined increments; and
a locking plate (20) having a base portion (22) and a locking area (24) extending from the base portion (22), the locking area (24) having a plurality of second teeth (26) extending outwardly therefrom, adjacent pairs of the plurality of second teeth (26) having a second gap (28) therebetween;
in an unlocked configuration the locking plate (20) is disengaged from the annular ring (12); and
in a locked configuration the base portion (22) is secured and a pair of the plurality of first teeth (16) engages an opposing pair of the second gaps (28) to prevent rotation of the annular ring (14) relative to the locking plate (20) and to maintain the torque preloading.

2. The bearing assembly (100) of claim 1, wherein axial end surfaces of the annular ring (12) and axial end surfaces of the locking plate (20) are in parallel planes.

3. The bearing assembly (100) of claim 1, further comprising a housing (34) having a first bore (36) defined by a first interior surface (38) extending between a first axial housing face (42) and a second axial housing face (40), the bearing outer ring (44) being disposed partially in the first bore (36) with the flange (48) abutting the first axial housing face (42) and the first threaded area (52) extending outwardly from the second axial housing face (40); and wherein the torque preloading of the bearing outer ring (44) secures the bearing outer ring (44) into the housing (34).

4. The bearing assembly (100) of claim 1, wherein in the locked position the base portion (22) is secured to the housing (34) to prevent rotation of the annular ring (14) relative to the housing (34) and to maintain the torque preloading of the bearing outer ring (44) in the housing (34).

5. The bearing assembly (100) of claim 1, wherein each of at least three of the plurality of first teeth (16) engage a respective one of the second gaps (28).

6. The bearing assembly (100) of claim 1, wherein at least two of the first gaps (18) are tool receiving slots (30) that have a greater radially inward depth than other ones of the first gaps (18).

7. The bearing assembly (100) of claim 1, wherein four of the first gaps (18) are tool receiving slots (30) spaced equally apart from one another and have a greater radially inward depth than other ones of the first gaps (18).

8. The bearing assembly (100) of claim 1, wherein six of the first gaps (18) are tool receiving slots (30) spaced equally apart from one another and have a greater radially inward depth than other ones of the first gaps (18).

9. The bearing assembly (100) of claim 1, wherein eight of the first gaps (18) are tool receiving slots (30) spaced equally apart from one another and have a greater radially inward depth than other ones of the first gaps (18).

10. The bearing assembly (100) of claim 1, wherein the base portion (22) includes fastening area (32) for securing the locking plate (20) to a fixture.

## Patentansprüche

1. Lageranordnung (100), umfassend:
einen eine zylindrische äußere Oberfläche (46) definierenden äußeren Lagerring (44) und einen sich nahe an einem ersten Ende (50) der äußeren Oberfläche (46) radial nach außen erstreckenden Flansch (48), einen in der äußeren Oberfläche (46) nahe an einem zweiten Ende (54) der äußeren Oberfläche (46) ausgebildeten ersten Gewindebereich (52);
einen kreisförmigen Ring (12) mit einem radial nach innen weisenden Gewindebereich (14), der mit dem ersten Gewindebereich (52) der äußeren Oberfläche (46) in Gewindeeingriff steht;
eine Drehsicherungsvorrichtung (10), umfassend:
eine Mehrzahl von sich von dem kreisförmigen Ring (12) radial nach außen erstreckenden ersten Zähnen (16), wobei benachbarte Paare der Mehrzahl von ersten Zähnen (16) zwischen sich eine erste Lücke (18) aufweisen, wobei die Mehrzahl von ersten Zähnen (16) von einer festgelegten Anzahl ist, die ausreicht, um eine Drehmomentvorspannung des äußeren Lagerrings (44) in festgelegten Schritten anzupassen; und
eine Arretierplatte (20) mit einem Basisabschnitt (22) und einem sich von dem Basisabschnitt (22) erstreckenden Arretierbereich (24), wobei der Arretierbereich (24) eine Mehrzahl von sich von diesem nach außen erstreckenden zweiten Zähnen (26) aufweist, wobei benachbarte Paare der Mehrzahl von zweiten Zähnen (26) zwischen sich eine zweite Lücke (28) aufweisen;
in einer nicht arretierten Konfiguration ist die Arretierplatte (20) von dem kreisförmigen Ring (12) getrennt ist; und
in einer arretierten Konfiguration ist der Basisabschnitt (22) gesichert und ein Paar der Mehrzahl von ersten Zähnen (16) nimmt ein gegenüberliegendes Paar der zweiten Lücken (28) in Eingriff, um eine Rotation des kreisförmigen Rings (14) relativ zu der Arretierplatte (20) zu verhindern und die Drehmomentvorspannung aufrechtzuerhalten.

2. Lageranordnung (100) nach Anspruch 1, wobei sich axiale Endoberflächen des kreisförmigen Rings (12) und axiale Endoberflächen der Arretierplatte (20) in parallelen Ebenen befinden.

3. Lageranordnung (100) nach Anspruch 1, weiterhin umfassend ein Gehäuse (34) mit einer ersten Bohrung (36), definiert durch eine sich zwischen einer ersten axialen Gehäuseseite (42) und einer zweiten axialen Gehäuseseite (40) erstreckende erste innere Oberfläche (38), wobei der äußere Lagerring (44) teilweise in der ersten Bohrung (36) angeordnet ist, wobei der Flansch (48) an die erste axiale Gehäuseseite (42) anstößt und sich der erste Gewindebereich (52) von der zweiten axialen Gehäusefläche (40) nach außen erstreckt; und wobei die Drehmomentvorspannung des äußeren Gewinderings (44) den äußeren Gewindering (44) innerhalb des Gehäuses (34) sichert.

4. Lageranordnung (100) nach Anspruch 1, wobei der Basisabschnitt (22) in der arretierten Position an dem Gehäuse (34) gesichert ist, um eine Rotation des kreisförmigen Rings (14) relativ zu dem Gehäuse (34) zu verhindern und die Drehmomentvorspannung des äußeren Lagerrings (44) in dem Gehäuse (34) aufrechtzuerhalten.

5. Lageranordnung (100) nach Anspruch 1, wobei jeder von zumindest drei der Mehrzahl von ersten Zähnen (16) eine entsprechende der zweiten Lücken (28) in Eingriff nimmt.

6. Lageranordnung (100) nach Anspruch 1, wobei zumindest zwei der ersten Lücken (18) Werkzeugaufnahmeschlitze (30) sind, die eine größere radial nach innen verlaufende Tiefe aufweisen als andere der ersten Lücken (18).

7. Lageranordnung (100) nach Anspruch 1, wobei vier der ersten Lücken (18) Werkzeugaufnahmeschlitze (30) sind, die zueinander gleich beabstandet sind und eine größere radial nach innen verlaufende Tiefe aufweisen als andere der ersten Schlitze (18).

8. Lageranordnung (100) nach Anspruch 1, wobei sechs der ersten Lücken (18) Werkzeugaufnahmeschlitze (30) sind, die zueinander gleich beabstandet sind und eine größere radial nach innen verlaufende Tiefe aufweisen als andere der ersten Lücken (18).

9. Lageranordnung (100) nach Anspruch 1, wobei acht der ersten Lücken (18) Werkzeugaufnahmeschlitze (30) sind, die zueinander gleich beabstandet sind und eine größere radial nach innen verlaufende Tiefe aufweisen als andere der ersten Schlitze (18).

10. Lageranordnung (100) nach Anspruch 1, wobei der Basisabschnitt (22) Befestigungsbereich (32) zum Sichern der Arretierplatte (20) an einer Halterung einschließt.

## Revendications

1. Ensemble de palier (100) comprenant :
une bague extérieure de palier (44) définissant une surface extérieure cylindrique (46) et une flasque (48) s'étendant radialement vers l'extérieur à proximité d'une première extrémité (50) de la surface extérieure (46), une première zone filetée (52) formée dans la surface extérieure (46) à proximité d'une seconde extrémité (54) de la surface extérieure (46) ;
une bague annulaire (12) ayant une zone filetée orientée radialement vers l'intérieur (14) en prise de manière filetée avec la première zone filetée (52) de la surface extérieure (46) ;
un dispositif anti-rotation (10) comprenant :
une pluralité de premières dents (16) s'étendant radialement vers l'extérieur à partir de la bague annulaire (12), des paires adjacentes de la pluralité de premières dents (16) ayant un premier espace (18) entre celles-ci, la pluralité de premières dents (16) étant d'un nombre prédéterminé suffisant pour ajuster une précontrainte de couple de la bague extérieure de palier (44) selon des incréments prédéterminés ; et
une plaque de verrouillage (20) ayant une partie de base (22) et une zone de verrouillage (24) s'étendant depuis la partie de base (22), la zone de verrouillage (24) ayant une pluralité de secondes dents (26) s'étendant vers l'extérieur à partir de celle-ci, des paires adjacentes de la pluralité de secondes dents (26) ayant un second espace (28) entre celles-ci ;
dans une configuration déverrouillée, la plaque de verrouillage (20) est libérée de la bague annulaire (12) ; et
dans une configuration verrouillée, la partie de base (22) est fixée et une paire de la pluralité de premières dents (16) vient en prise avec une paire opposée des seconds espaces (28) pour empêcher une rotation de la bague annulaire (14) par rapport à la plaque de verrouillage (20) et pour maintenir la précontrainte de couple.

2. Ensemble de palier (100) selon la revendication 1, dans lequel les surfaces d'extrémité axiales de la bague annulaire (12) et les surfaces d'extrémité axiales de la plaque de verrouillage (20) sont dans des plans parallèles.

3. Ensemble de palier (100) selon la revendication 1, comprenant en outre un boîtier (34) ayant un premier alésage (36) défini par une première surface intérieure (38) s'étendant entre une première face de boîtier axiale (42) et une seconde face de boîtier axiale (40), la bague extérieure de palier (44) étant disposée partiellement dans le premier alésage (36) avec la flasque (48) venant en butée contre la première face de boîtier axiale (42) et la première zone filetée (52) s'étendant vers l'extérieur à partir de la seconde face de boîtier axiale (40) ; et dans lequel la précharge de couple de la bague extérieure de palier (44) fixe la bague extérieure de palier (44) dans le boîtier (34) .

4. Ensemble de palier (100) selon la revendication 1, dans lequel dans la position verrouillée, la partie de base (22) est fixée au boîtier (34) pour empêcher une rotation de la bague annulaire (14) par rapport au boîtier (34) et pour maintenir la précontrainte de couple de la bague extérieure de palier (44) dans le boîtier (34).

5. Ensemble de palier (100) selon la revendication 1, dans lequel chacune d'au moins trois de la pluralité de premières dents (16) vient en prise dans l'un respectif des seconds espaces (28).

6. Ensemble de palier (100) selon la revendication 1, dans lequel au moins deux des premiers espaces (18) sont des fentes de réception d'outil (30) qui ont une profondeur radialement vers l'intérieur supérieure aux autres des premiers espaces (18).

7. Ensemble de palier (100) selon la revendication 1, dans lequel quatre des premiers espaces (18) sont des fentes de réception d'outil (30) espacées les unes des autres de manière égale et ont une profondeur radialement vers l'intérieur supérieure aux autres des premiers espaces (18).

8. Ensemble de palier (100) selon la revendication 1, dans lequel six des premiers espaces (18) sont des fentes de réception d'outil (30) espacées également séparément l'une de l'autre et ont une profondeur radialement supérieure vers l'intérieur aux autres des premiers espaces (18).

9. Ensemble de palier (100) selon la revendication 1, dans lequel huit des premiers espaces (18) sont des fentes de réception d'outil (30) espacées les unes des autres de manière égale et ont une profondeur radialement vers l'intérieur supérieure aux autres des premiers espaces (18).

10. Ensemble de palier (100) selon la revendication 1, dans lequel la partie de base (22) comprend une zone de fixation (32) pour fixer la plaque de verrouillage (20) à un dispositif de fixation.
